# EUROPEAN PATENT SPECIFICATION

(11) **EP 1 111 984 B1**
(45) Date of publication and mention of the grant of the patent: **23.06.2004**
(21) Application number: 99939472.9
(22) Date of filing: 23.08.1999
(51) Int. Cl.: A01B 59/043

(54) **COUPLING HOOK PARTICULARLY FOR THE LOWER ARMS OF A THREE-POINT LINKAGE OF A TRACTOR**
KUPPLUNGSHAKEN INSBESONDERE FÜR TRAKTORDREIPUNKTKRAFTHEBERUNTERLENKER
CROCHET D'ATTELAGE PARTICULIEREMENT CON U POUR LES BRAS INFERIEURS D'UN ATTELAGE TROIS POINTS DE TRACTEUR

(30) Priority: 21.08.1998 FI 981792
(43) Date of publication of application: 04.07.2001
(73) Proprietor: VIIKKI, Paavo Antero, 41370 Kuusa (FI)
(72) Inventor: VIIKKI, Paavo Antero, 41370 Kuusa (FI)
(74) Representative: Helke, Kimmo Kalervo
(86) International application number: PCT/FI1999/000691
(87) International publication number: WO 2000/010376

(56) References cited:
- EP-A1- 0 850 789
- DE-A1- 2 749 311
- DE-B1- 2 831 862
- DE-B2- 2 617 021
- FR-A1- 2 535 934
- FR-A1- 2 555 398

## Description

The present invention relates particularly to a coupling hook for the lower arms of a three-point linkage of a tractor, which coupling hook is of the type referred to in the preamble of Claim 1

Snap-fit couplings of three-point linkages for tractors have been developed for a long time. Generally, coupling balls, to which the tractor's upper and lower arms are connected, installed on the device to be coupled, are used in quick-action couplings. The ends of the upper and lower arms have special coupling hooks for this quick-action coupling.

DE publication number 27 49 311 discloses a coupling hook for the lower arms, in which there is a convention coupling jaw for a coupling ball. The coupling hook includes a catch moving in a drilled hole machined in the body of the hook for locking the coupling ball to the coupling jaw. A cable is connected to the catch for pulling the catch into the open position, i.e. inside the body. In addition, the coupling hook includes a spring, which is arranged to press the catch the whole time into the locking position. However, the catch and the spring are, as known, arranged in such a way that the coupling hook can be coupled to the coupling ball while the catch is in the locking position. In coupling, the coupling ball pushes the catch in front of it inside, which, when the coupling ball settles into the coupling jaw, rises immediately to the locking position and forms the coupling.

In the solution described above, the catch is pulled by means of a long cable, which stretches in use and demands continual maintenance. In addition, the cable must be installed under the lower arm, where it is continually exposed to external impacts.

The separate operating lever is also easily broken and requires a great deal of space for installation. In addition, in the solution, both catches are arranged to be operated simultaneously by a single operating lever. This prevents the catches being used separately.

The present invention is intended to create a new type of mechanism especially for the coupling hook of the lower arm of a three-point linkage of a tractor, which is reliable and which is easy and natural to use. The characteristic features of a coupling hook according to the invention are disclosed in the accompanying Claims. A coupling hook according to the invention differs from known coupling hooks particularly in that not only is the movement of the catch optimal, but the movement and location of the operating lever are also optimal. This is achieved by turning the movement of the operating lever to become the movement of the catch, by means of a special pull-turning device.

The reliability of the operation of a catch to be applied in the coupling hook has been tested in a lower arm coupling hook, which is disclosed, for example in FI publication 100845 and DE publication 28 31 862. The utilization of such a catch in the coupling hook of a lower arm is possible only now, with the aid of a pull-turning device according to the invention. The directions of movement of both the catch and the operating lever are thus optimal, because they can be selected freely, entirely independently of one another. The operating lever is preferably above the hook, where it is protected from external impacts. The direction of movement of the operating lever is also optimal, i.e. at a slight upward angle. In practical embodiments, the angle between the direction of movement of the operating lever turned by the pull-turning device and that of the catch is about 90°. In addition to the pull-turning device, it is possible, according to the invention, to create large working surfaces in the catch, thus giving it excellent resistance to wear. It is also simple to combine the operation of the coupling hooks, without complicated accessories.

In the following, the invention is disclosed in detail with reference to the accompanying drawings of certain embodiments of the invention, in which
- Figure 1: shows the coupling ball of a coupling hook according to the invention locked to the coupling jaw,
- Figure 2: shows the coupling hook in Figure 1 locked in the open position,
- Figure 3: shows another embodiment of a coupling hook according to the invention in the same position as in Figure 1,
- Figure 4: shows the coupling hook in Figure 3 pulled into the open position,
- Figure 5: shows a third embodiment of a coupling hook according to the invention in the same position as in Figure 1, and
- Figure 6: shows the coupling hook in Figure 5 pulled into the open position.

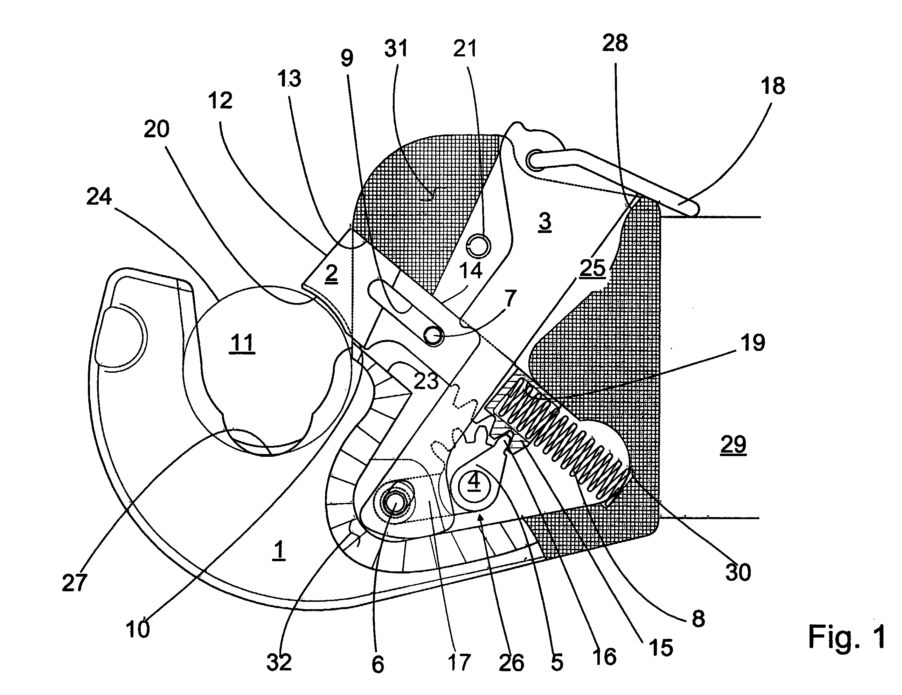

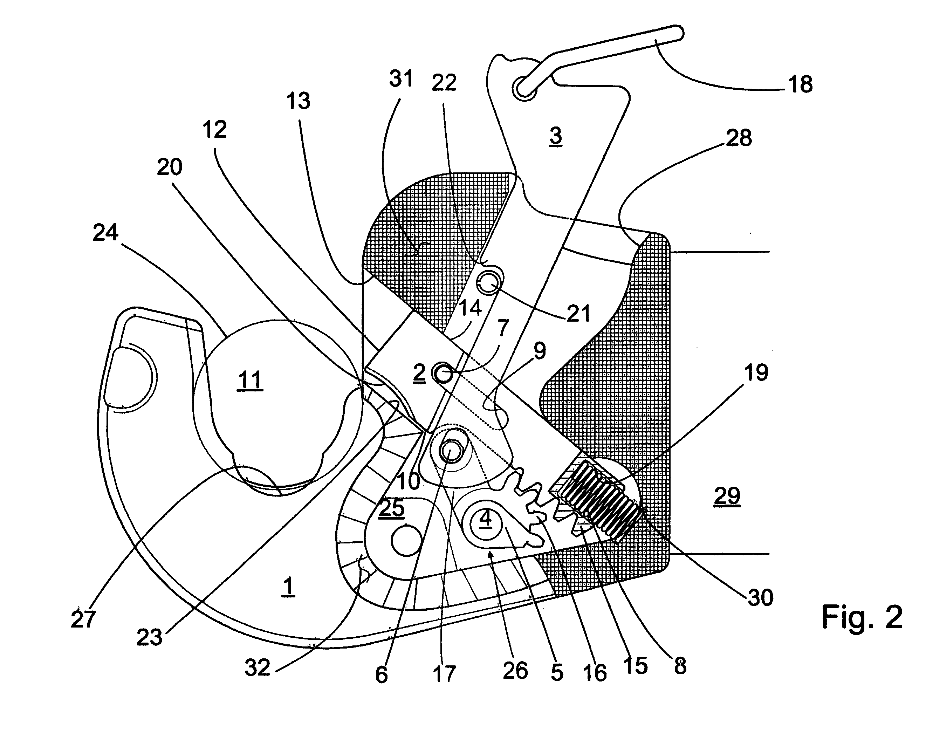

In the figures, the coupling hook according to the invention is shown without the cover that is welded onto the coupling hook in the final product. The shaded area depicts the surface 31 of the body 1 of the coupling hook, over which the cover extends. The cover conforms to the outer shape of the coupling hook and also lies in the bevel 32 in the coupling hook, while nevertheless leaving the lower part of the catch mechanism visible. This opening is mainly intended to allow impurities that enter the coupling hook to fall out by gravity. In Figures 1 and 2, the edge of the cover forming the opening is shown by a broken line.

The coupling hook itself too is welded to the lower arm 29. The coupling hook includes a body 1 with a coupling jaw 27 and a housing 25.

Coupling jaw 27 is conventional and is particularly adapted to receive coupling ball 11. Usually, the coupling ball is permanently attached to the implement to be coupled, or else it is installed on a normal three-point linkage pin. The snap-coupling as such can be made without even a coupling ball, but this is not, however, recommended. In addition, the coupling ball helps to eliminate small differences of angle between the pin and the lower arm. In the figures, the coupling ball is shown with the reference number 11 and its surface with the reference number 24.

Housing 25 is machined in the forged coupling housing, and catch 2 with its operating mechanism is then fitted to it. Catch 2 is supported from all sides at least to some extent by the coupling jaw. Edges 13 and 23, out of the opening formed by which catch 2 emerges from housing 25, act as the actual load-bearing guides. In the embodiment in Figure 1, edge 13, which is above pawl 5, extends over the width of catch 2 for the entire length of its movement, even if there is a slot in edge 13 arranged at operating lever 3 on top of catch 2. In this case, a large load-bearing surface is formed, which substantially reduces wear in the counter-surfaces. Due to edges 13 and 23, the movement of catch 2 is linear. Catch 2 also has a slot 9, in which there is a pin 7 set in body 1, arranged to limit the linear movement of catch 2. Besides guiding catch 2, pin 7 also limits the linear movement of catch 2 to its operating area and prevents the operating mechanism of catch 2 from being loaded unnecessarily. Without pin 7, the force of spring 8 set in catch 2 would be transmitted to the entire operating mechanism. Spring 8 is fitted into hole 19 drilled in the lower end of catch 2 and continuously presses catch 2 into the locked position. The other end of spring 8 lies in a hole 30 machined in the base of housing 25.

In Figures 1, 3, and 5, the coupling hook is shown in the retaining position, in which catch 2 protrudes from housing 25 to lie partly on top of coupling ball 11. A position even partly on top of the ball prevents the coupling from disconnecting, because coupling ball 11 can only rise out of the coupling jaw 27 parallel to its centre line, in this case, straight upwards. Thus, catch 2 locks coupling ball 11 firmly into coupling jaw 27. In the retaining position, there is only a small tolerance between the surface 24 of coupling ball 11 and the locking surface 20 of catch 2, because no tolerance at all is required for catch 2 to open. After this small tolerance, the forces acting on locking surface 20 are transmitted almost entirely through the counter-surface 14 of the opposite side of catch 2 to the edge surface 13 above the opening, especially in the area of their upper sections. Thus, none of the forces transmitted from the coupling ball 11 can open catch 2. Instead they tend to force catch 2 into the retaining position, in the same way as spring 8. It is mostly only during coupling that the lower surface 10 of catch 2 lies next to edge 23.

Locking surface 20 of catch 2 is preferably a spherical surface, corresponding to the curvature of coupling ball 11. Locking surface 20 then becomes as large as possible, which reduces wear in catch 2. In the same way, coupling ball 11 is better centred in coupling jaw 27. The end, i.e. opening surface 12 of catch 2 is flat, which, during coupling, helps coupling ball 11 to settle into the coupling jaw, when catch 2 is in the retaining position. The coupling ball 11 pushes catch 2 in front of it inwards, the catch rising once again into the retaining position, once coupling ball 11 has settled into coupling jaw 27.

The coupling hook also includes operating lever 3 set in opening 28 above housing 25 for moving catch 2. In this case, operating lever 3 is made from a sheet material. According to the present invention, operating lever 3 is connected to catch 2 by means of pull-turning device 2-6, which is arranged to turn the essentially upwards-directed pulling movement of the operating lever 3 into the movement of catch 2 from the retaining position to the open position. Thanks to pull-turning device 26, it is possible to locate operating lever 3 above the coupling hook, which is a significant advantage in terms of its operation. Operating lever 3 is also protected inside the coupling jaw while the lower surface of the coupling jaw is closed and smooth. In addition, the upper end of operating lever 3 is dimensioned so that, in the retaining position, the aforesaid upper end covers opening 28 of housing 25, as shown in Figures 1, 3, and 5. A handle 18 is also fitted to the upper end, to make is easier to grip operating lever 3.

The angle between the pulling movement of operating lever 3, turned with pull-turning device 26, and catch 2 is 70° - 110°, preferably 80° - 100°. The angle between catch 2 and coupling ball 11 is preferably, as in the embodiments disclosed, about 50°. In that case, catch 2 opens at a downward angle, while operating lever 3 points slightly upwards. In general, this is an optimal arrangement from the points of view of the catch and operating lever.

A pull-turning device according to the invention can be implemented in different ways. One embodiment is shown in figures 1 and 2. In it, the pull-turning device 26 includes a pawl 5 mounted to turn in bearings in housing 25. Pawl 5 allows movements in different directions to be easily combined. In the embodiment, pawl 5 is secured to the body 1 of housing 25 by means of an axle pin 4 fitted to the body 1, around which axle pin 4 pawl 5 rotates. In addition, pawl 5 is set to engage with the corresponding teeth 15 arranged in catch 2. Pawl 5 also prevents catch 2 from turning downward. Pawl 5 also preferably includes a lever arm 17, to which operating lever 3 is jointed, to rotate pawl 5. In this case too, joint 6 is formed simply by a pin and an opening in operating lever 3. A good moment ratio for lever arm 17 has been found to be 1,1 - 2,0, preferably 1,3 - 1,7. Lever arm 17 allows a reduction in the force required to operate catch 2. Spring 8 can then be dimensioned to be sufficiently stiff to hold catch 2 closed, without affecting the operating comfort of the coupling hook.

In the first embodiment disclosed, pawl 5 is located beneath catch 2. This permits a large angle of rotation in pull-turning device 26 and also a sufficient movement in catch 2, without being limited by lever arm 17. Alternatively, pull-turning device 26 can be above catch 2, though in this case the advantages referred to are lost. Because pawl 5 never makes a complete revolution, pawl 5 only has teeth 16 over a certain segment. The angle subtended by the arc of the segment is 60° - 120°, preferably 90° - 110°. Generally, pawl 5 is arranged in such a way that it is always engaged with the teeth 15 of catch 2. The limited arc of the circle has 3 - 9 teeth 16, preferably 4 - 6, which is sufficient to achieve rotation. At the same time, the teeth should be made sufficiently large. Preferably, the teeth 16 are straight, so that they are easily manufactured and do not unnecessarily load the catch mechanism. In the embodiment, the tooth engaged in the retaining position is higher than the others. Correspondingly, the teeth 15 at the bottom end of catch 2 extend of the entire width of catch 2. This construction ensures the durability of the tooth that must transmit the force by itself when the teeth begin to disengage. In the centre, catch 2 is narrowed, which permits operating lever 3 and catch 2 to move side by side. In addition, pawl 5, or catch 2, or both are precision-cast pieces. Thus, they have excellent precision of shape, surface quality, and resistance to wear.

Figure 2 shows the coupling hook of Figure 1 in the open position. In this case, catch 2 is pulled into housing 25, to permit coupling ball 11 to rise out of coupling jaw 27. Catch 2 can also be locked into the open position, by simply setting operating lever 3 to rest its dog 22 on pin 21 in body 1, according to Figure 2.

Pull-turning device 26 can be implemented in many other ways than the above, though the toothed segment described has proven to be extremely practical in tests. In the most preferred mechanism, there is at least one member mounted by bearings in the housing, in which there are opposing support points for bearings on other sides, so that it can turn the direction of movement. In place of the toothed segment, it is possible to use a jointed arm, which is also jointed to the catch. In the embodimens, the pull-turning device is jointed to the housing by means of a pin. A form of jointing that, as such, is practicable can be implemented by means of circumferential surfaces. A small amount of movement in the pull-turning device can also be incorporated in a joint of this kind.

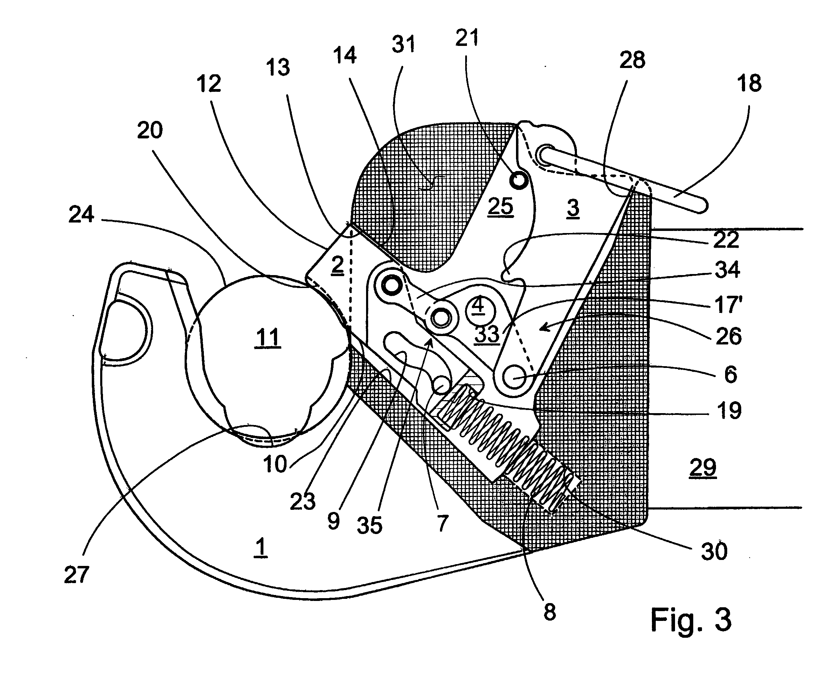

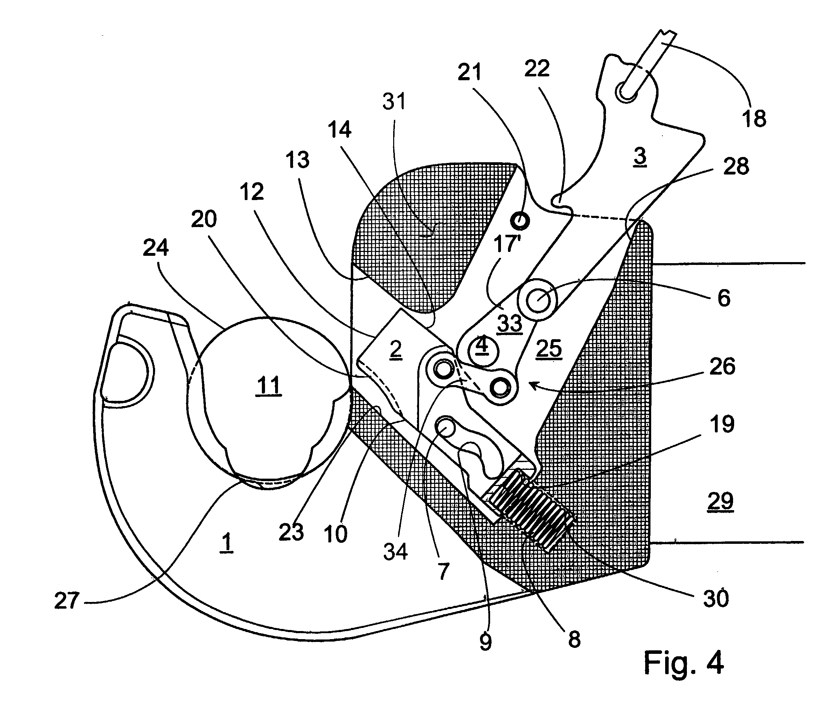

The operating principle disclosed in the section above is also applied in a second embodiment of the coupling hook, shown in Figures 3 and 4. In this case, the pull-turning device 26 includes an intermediate piece 33, mounted by bearings in housing 25 so that it can rotate, which is joined to catch 2 by means of jointed arm 34. The bearings of intermediate piece 33 are implemented by means of an axle pin 4 fitted to body 1. Intermediate piece 33 too includes a lever arm 17', to which operating lever 3 is jointed to rotate intermediate piece 33. Because intermediate piece 33 is smaller that pawl 5, it is possible to make lever arm 17' long. The moment ratio created by lever arm 17' is then also greater. Generally, the moment ratio is 1,0 - 2,4, preferably 1,5 - 2,0.

This embodiment has the same main features and the same reference numbers are used for the same functional components. However, this embodiment has two significant special features. Intermediate piece 33 of the pull-turning device and part of jointed arm 34 are set above catch 2. This allows housing 25 to be made smaller and body 1 correspondingly stronger. In addition slot 9 of catch 2 is curved in such a way that the bottom end of catch 2 is arranged to turn downwards when catch 2 is pulled from the retaining position to the open position. At the same time, intermediate piece 33 presses catch 2 downwards at point 35 at the beginning of the opening pull. This makes it easier to open catch 2 when coupling ball 11 is loading the catch. The aforementioned features do not, however, affect the grip of the coupling hook. In addition, the movement of catch 2 is still essentially linear, despite the small initial turn.

The components of the second embodiment are smaller and easier to manufacture than the components of the first embodiment. Though the second embodiment has several joints on account of jointed arm 34, wear in them does not affect the grip of the coupling hook. This is because the line of movement of catch 2 is determined by edges 13 and 23 and slot 9 and pin 7 jointly.

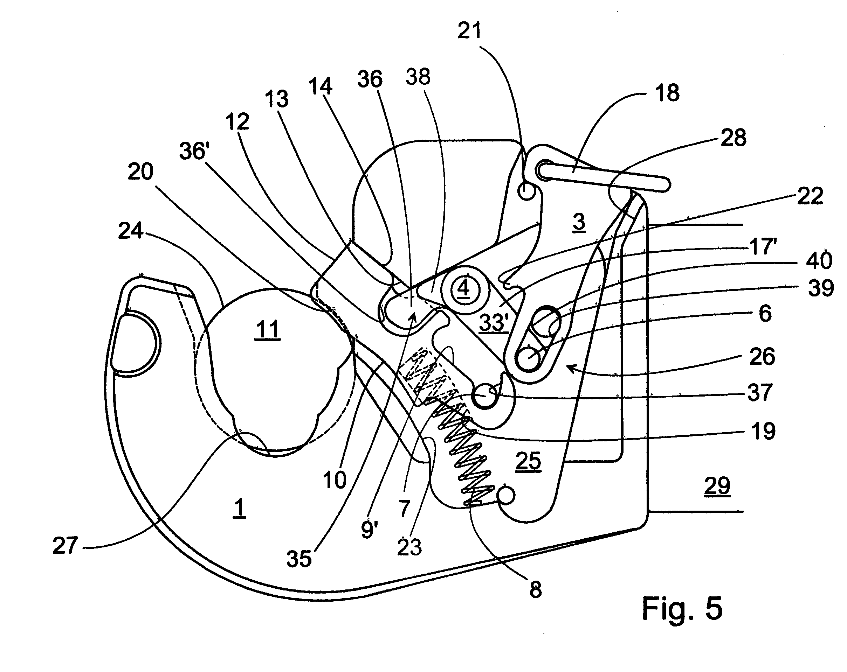

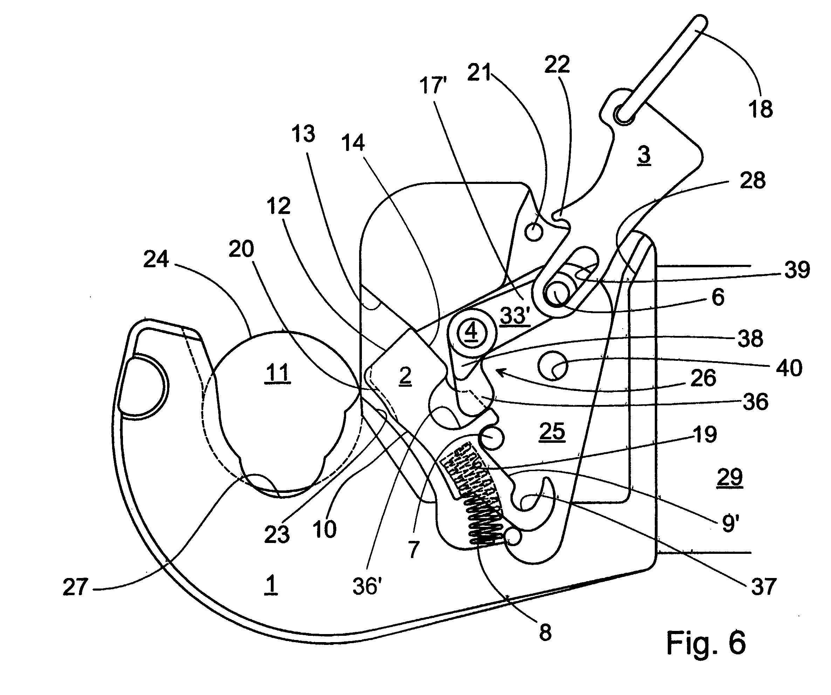

Figures 5 and 6 show a third embodiment of the coupling hook. Its operating principle corresponds to the embodiment disclosed above. Here too pull-turning device 26 includes an intermediate piece 33' that is mounted in bearings to rotate in housing 25. However, intermediate piece 33' operates catch 2 directly through dog 36, which reduces the number of components in the pull-turning device. In catch 2, there is also a notch 36', corresponding to dog 36. In this case, dog 36 and notch 36' together form in principle a single-tooth gear. The moment ratio created by lever arm 17' in intermediate piece 33' corresponds essentially to the moment ratio of the second embodiment.

In addition, the third embodiment has significant special features. The bottom end of catch 2 has a shaped surface 9', which pin 7 follows to determine the line of movement of catch 2. In the retaining position shown in Figure 5, pin 7 lies in hole 37 in catch 2. In this position, even the turning of coupling ball 11 cannot open the catch, because catch 2 cannot turn when upper surface 14 presses against upper edge 13. On the other hand, catch 2 is easily opened by pulling on operating lever 3. Also when locking coupling ball 11 catch 2 can be pressed slightly downwards, when pin 7 lies on the straight section of surface 9', making it possible to press catch 2 downwards. In addition, intermediate piece 33' of the pull-turning device and catch 2 are shaped to create a two-stage movement in catch 2. First of all, catch 2 is forced by intermediate piece 33' to turn slightly, after which it moves essentially linearly downwards, as in the second embodiment. For this purpose, there is a dog 38 in intermediate piece 33', which, at the start of the down pull, presses catch 2 down at point 35. The actual movement of the catch then takes place through the joint operation of dog 36 and notch 36'.

The reduced number of components allows intermediate piece 33' to located higher and pin 7 correspondingly lower in housing 25 than previously. This evens the line of movement of the catch and makes it possible to manufacture a strong catch. In addition, spring 8 can be located in curve under catch 2, when the spring will also always press the catch against the upper edge. In addition, intermediate piece 33' is jointed to operating lever 3 by means of slot 39. Thus, when the coupling ball is being locked, the operating lever hardly moves and the housing remains closed. In the locking position, there is also a hole 40 through the coupling hook at the upper part of slot 39, in which a locking pin (not shown) can be placed. Joint pin 6, which links intermediate piece 33' and the operating Lever is located in the same hole. The movement of the entire pull-turning device can be prevented by means of the locking pin. This makes it possible to lock the operation of the coupling hook, which improves work safety, among other things.

The coupling hook can be dismantled and the components replaced, even though the cover is welded onto it. Assembling is also possible without opening the cover. If the pins are removed in a certain order, the entire catch mechanism can be dismantled. The coupling hook disclosed here and other embodiments of the coupling hook according to the invention have in common an operationally jointed pull-turning device, in which there are lever arms or similar to achieve moment conversion.

## Claims

1. A coupling hook particularly for the lower arms of a three-point linkage of a tractor, which is intended to attach an implement to a tractor by means of a coupling ball (11) or similar, which coupling hook includes a body (1), in which there is a housing (25) for a catch mechanism and a coupling jaw (27), especially arranged to receive the aforesaid coupling ball (11), the movement of which in relation to the coupling hook is essentially vertical; a catch (2) moving essentially linearly in guides (13, 23) arranged in the housing (25); a spring (8) arranged to press the catch (2) into the retaining position, in which retaining position the end of the catch (2) protrudes from the housing (25) towards the coupling jaw (27) at least partly on top of the coupling ball (11) to lock the coupling ball (11) into the coupling jaw (27), whereas in the open position catch (2) is withdrawn into the housing (25), permitting the coupling ball (11) to rise out of the coupling jaw (27); and an operating lever (3) fitted to catch (2) particularly to move catch (2) from the retaining position to the open position and fitted in to the opening (28) above the housing (25); a pull-turning device (26) having a lever member (5, 33, 33') hinged to the body (1) at a pin point (4) and connecting the operating lever (3) at a second pin point (6) and the catch (2) through a third point or contact area of the lever member and turning the operating lever's (3) upward pulling movement into a movement of the catch (2) from the retaining position to the open position, **characterized in that** the radial direction of the connection of the operating lever (3) defined by a line passing through the first and the second pin points (4, 6) in the hinged lever member (5, 33, 33') differs essentially from the radial direction of the connection of the catch (2) defined by a second line passing through the first pin point (4) and the third point or contact area, and that the catch (2) opens downwards in the housing (25).

2. A coupling hook according to Claim 1, **characterized in that** the angle between the pulling direction of operating lever (3) that pulls the pull-turning device (26) and the pulling direction of the catch (2) is 70° - 110°, most preferably 80° - 100°.

3. A coupling hook according to Claim 1 or 2, **characterized in that** the pull-turning device (26) includes a pawl (5) mounted in bearings to rotate in housing (25), which is arranged to engage corresponding teeth (15) set in the catch (2)

4. A coupling hook according to Claim 3, **characterized in that** the pawl (5) includes a lever arm (17), to which operating lever (3) is jointed to rotate pawl (5), the moment ratio created being 1,1 - 2,0, most preferably 1,3 - 1,7.

5. A coupling hook according to Claim 3 or 4, **characterized in that** pawl (5) is located beneath the catch (2), in which case operating lever (3) extends above over catch (2) to pawl (5) beneath.

6. A coupling hook according to one of Claims 3 - 5, **characterized in that** pawl (5) has teeth (16) only for an arc of the circle, which arc of the circle subtends an angle of 60° - 120°, most preferably 90° - 110°.

7. A coupling hook according to Claim 6, **characterized in that** teeth (16) are straight and that there are 3-9, most preferably 4 - 6, of them.

8. A coupling hook according to Claim 1 or 2, **characterized in that** pull-turning device (26) includes an intermediate piece (33) mounted to rotate in bearings in housing (25), and which is connected to catch (2) by means of jointed arm (34).

9. A coupling hook according to Claim 1 or 2, **characterized in that** pull-turning device (26) includes an intermediate piece (33') mounted to rotate in bearings in housing (25) and which includes a dog (36) and that the catch includes a notch (36') corresponding to dog (36), in which case intermediate piece (33') is arranged to move catch (2) with the aid of dog (36).

10. A coupling hook according to Claim 9, **characterized in that** intermediate piece (33') is jointed to operating lever (3) by means of a slot (39).

11. A coupling hook according to Claim 10, **characterized in that**, in the locking position, there is a hole (40) through the coupling hook at the upper part of slot (39), to allow a locking pin to be placed in the slot.

12. A coupling hook according to Claim 8 or 9, **characterized in that** intermediate piece (33) includes a lever arm (17'), to which operating lever (3) is jointed to turn intermediate piece (33, 33'), the moment ration created being 1,0 - 2,4, most preferably 1,5 - 2,0.

13. A coupling hook according to Claim 8 or 9, **characterized in that** intermediate piece (33, 33') and part of jointed arm (34) are located above catch (2).

14. A coupling hook according to one of Claims 1 - 13, **characterized in that** there is a slot (9) or surface (9') in the catch (2) and a pin (7) in body (1) fitting this, which is arranged to limit the linear movement of catch (2).

15. A coupling hook according to Claim 14, **characterized in that** surface (9') forms a hole (37) at the bottom end of catch (2), into which pin (7) is arranged to engage when catch (2) is in the retaining position.

16. A coupling hook according to one of Claims 1 - 15, **characterized in that** the upper end of operating lever (3) is dimensioned in such a way that, when catch (2) is in the retaining position, the aforesaid upper end covers the upper 5 opening (28) in housing (25).

17. A coupling hook according to Claim 14, **characterized in that** slot (9) in catch (2) is curved in such a way that the bottom end of catch (2) is arranged to turn downwards, when catch (2) is pulled from the retaining position to the open position.

18. A coupling hook according to one of Claims 1 - 17, **characterized in that** catch (2) is a precision-cast piece.

19. A coupling hook according to one of Claims 3 - 7, **characterized in that** pawl (5) is a precision-cast piece.

## Patentansprüche

1. Insbesondere für den Unterlenker von Traktor-Dreipunktanbauvorrichtungen vorgesehener Fanghaken, der dazu dient, ein Gerät über eine Fangkugel (11) oder dergleichen am Traktor zu befestigen, und der aus einem Hakenkörper (1) mit einem Gehäuse (25) für den Riegelmechanismus und einem Kupplungsmaul (27) zur Aufnahme insbesondere der besagten Fangkugel (11), zu der sich der Fanghaken im Wesentlichen vertikal bewegt; einem Riegelglied (2), das sich in am Gehäuse (25) angeordneten Führungen (13, 23) im Wesentlichen linear bewegt; einer das Riegelglied (2) in Verriegelungsstellung drückenden Feder (8), wobei sich in Verriegelungsstellung das eine Ende des Riegelgliedes (2) aus dem Gehäuse (25) heraus teilweise über die Fangkugel (11) erstreckt und diese so im Kupplungsmaul (27) verriegelt, während das Riegelglied (2) in Entriegelungsstellung ins Gehäuse (25) eingezogen ist und so ermöglicht, dass sich die Fangkugel (11) aus dem Kupplungsmaul (27) herausbewegt; einem am Riegelglied (2) und in der oben am Gehäuse (25) befindlichen Öffnung (28) angeordneten Betätigungshebel (3) zum Bewegen des Riegelgliedes (2) insbesondere aus der Verriegelungsstellung in die Entriegelungsstellung; und einer mit einem Hebelelorgan (5, 33, 33') versehenen Zugumlenkvorrichtung (26), die angelenkt an den Hakenkörper (1) ist über einen Gelenkzapfen (4) und an den Betätigungshebel (3) über einen zweiten Gelenkzapfen (6) und das Riegelglied über einen dritten Punkt oder eine Kontaktfläche des Betätigungshebels und die nach oben gerichtete Zugbewegung des Betätigungshebels in eine das Riegelglied (2) aus der Verriegelungsstellung in die Entriegelungsstellung bringende Bewegung umwandelt, besteht, **dadurch gekennzeichnet, dass** die Radialrichtung der Verbindung des Betätigungshebels (3), definiert mit Hilfe der über den ersten und den zweiten Gelenkzapfen (4, 6) am angelenkten Hebelglied (3, 33, 33') laufenden Linie, wesentlich von der Radialrichtung der Verbindung des Riegelgliedes (2), definiert mit Hilfe der durch den ersten Gelenkzapfen (4) und einen dritten Punkt oder Berührungsbereich laufenden Linie, abweicht, und dass sich das Riegelglied (2) beim Öffnen nach unten ins Gehäuse (25) zurückzieht.

2. Fanghaken nach Anspruch 1, **dadurch gekennzeichnet, dass** der Winkel zwischen der Richtung der mit der Zugumlenkvorrichtung (26) umzulenkenden Zugbewegung des Betätigungshebels (3) und der Richtung der Zugbewegung des Riegelgliedes (2) 70° - 110°, bevorzugt 80° - 100° beträgt.

3. Fanghaken nach Anspruch 1 oder 2, **dadurch gekennzeichnet, dass** die Zugumlenkvorrichtung (26) ein am Gehäuse (25) drehbar gelagertes Zahnrad (5) aufweist, das mit einer am Riegelglied (2) ausgebildeten entsprechenden Verzahnung (15) im Eingriff steht.

4. Fanghaken nach Anspruch 3, **dadurch gekennzeichnet, dass** zu dem Zahnrad (5) ein Hebelarm (17) gehört, an den der Betätigungshebel (3) zwecks Drehens des Zahnrades angelenkt ist, wobei das mit dem Hebelarm (17) bewirkte Hebelverhältnis 1,1 - 2,0, bevorzugt 1,3 - 1,7 beträgt.

5. Fanghaken nach Anspruch 3 oder 4, **dadurch gekennzeichnet, dass** das Zahnrad (5) unterhalb des Riegelgliedes (2) angeordnet ist, wobei sich der Betätigungshebel (3) von oben über das Riegelglied (2) hinweg bis zu dem darunter befindlichen Zahnrad (5) erstreckt.

6. Fanghaken nach irgendeinem der Ansprüche 3 bis 5, **dadurch gekennzeichnet, dass** das Zahnrad (5) Zähne (16) lediglich über einen Kreissektor aufweist, dessen Zentriwinkel 60° - 120°, bevorzugt 90° - 110° beträgt.

7. Fanghaken nach Anspruch 6, **dadurch gekennzeichnet, dass** die Zähne (16) gerade und in einer Anzahl von 3 - 9 Stück, bevorzugt von 4 - 6 Stück vorhanden sind.

8. Fanghaken nach Anspruch 1 oder 2, **dadurch gekennzeichnet, dass** zu der Zugumlenkvorrichtung (26) ein am Gehäuse (25) drehbar gelagertes Zwischenglied (33) gehört, das über einen Gelenkarm (34) mit dem Riegelglied (2) verbunden ist.

9. Fanghaken nach Anspruch 1 oder 2, **dadurch gekennzeichnet, dass** zu der Zugumlenkvorrichtung (26) ein am Gehäuse (25) drehbar gelagertes Zwischenglied (33') mit einem Nocken (36) gehört und das Riegelglied (2) eine diesem Nocken (36) entsprechende Ausnehmung (36') hat, wobei das Zwischenglied (36) dazu dient, das Riegelglied (2) mittels des Nockens (36) zu bewegen.

10. Fanghaken nach Anspruch 9, **dadurch gekennzeichnet, dass** das Zwischenglied (33') über eine Schlitzöffnung (39) an den Betätigungshebel (3) angelenkt ist.

11. Fanghaken nach Anspruch 10, **dadurch gekennzeichnet, dass** sich in Verriegelungsstellung beim Oberteil der Schlitzöffnung (39) eine sich durch den Fanghaken hindurch erstreckende Öffnung (40) zum Einführen eines Sicherungsstiftes in die Schlitzöffnung befindet.

12. Fanghaken nach Anspruch 8 oder 9, **dadurch gekennzeichnet, dass** das Zwischenglied (33) einen Hebelarm (17') aufweist, an den der Betätigungshebel (3) zwecks Drehens des Zwischengliedes (33) angelenkt ist, wobei das mit dem Hebelarm (17') bewirkte Hebelverhältnis 1,0 - 2,4, bevorzugt 1,5 - 2,0 beträgt.

13. Fanghaken nach Anspruch 8 oder 9, **dadurch gekennzeichnet, dass** das Zwischenglied (33, 33') und ein Teil des Gelenkarmes (34) oberhalb des Riegelgliedes (2) angeordnet sind.

14. Fanghaken nach irgendeinem der Ansprüche 1 bis 13, **dadurch gekennzeichnet, dass** das Riegelglied (2) eine Schlitzöffnung (9) oder Fläche (9') hat und am Hakenkörper (1) ein dieser Öffnung (9) oder Fläche (9') angepasster Stift (7) vorhanden ist, der dazu dient, die Linearbewegung des Riegelgliedes (2) zu begrenzen.

15. Fanghaken nach Anspruch 14, **dadurch gekennzeichnet, dass** die Fläche (9') am unteren Ende des Riegelgliedes (2) eine Ausnehmung (37) bildet, in die der Stift (7) in Verriegelungsstellung des Riegelgliedes (2) eingerastet ist.

16. Fanghaken nach irgendeinem der Ansprüche 1 bis 15, **dadurch gekennzeichnet, dass** das obere Ende des Betätigungshebels (3) so bemessen ist, dass es in Verriegelungsstellung des Riegelgliedes (2) die obere Öffnung (28) des Gehäuses (25) verdeckt.

17. Fanghaken nach Anspruch 14, **dadurch gekennzeichnet, dass** die Schlitzöffnung (9) des Riegelgliedes (2) so geschweift ist, dass das Riegelglied (2) beim Ziehen aus der Verriegelungsstellung in die Entriegelungsstellung nach unten gedreht wird.

18. Fanghaken nach irgendeinem der Ansprüche 1 bis 17, **dadurch gekennzeichnet, dass** das Riegelglied (2) aus einem Präzisionsgussstück besteht.

19. Fanghaken nach irgendeinem der Ansprüche 3 bis 7, **dadurch gekennzeichnet, dass** das Zahnrad (5) aus einem Präzisionsgussstück besteht.

## Revendications

1. Crochet d'attelage particulièrement conçu pour les bras inférieurs d'un attelage trois points de tracteur destiné à la fixation d'un outil au tracteur au moyen d'une rotule ou dispositif similaire, lequel crochet comprend: un châssis (1) comportant un logement (25) pour un mécanisme de verrouillage et une mâchoire d'accouplement (27) conçus spécialement pour recevoir la rotule (11) susmentionnée, et par rapport à laquelle le mouvement du crochet d'attelage est essentiellement vertical; un verrou (2) se déplaçant de façon essentiellement linéaire dans des guides (13,23) disposés dans le logement (25); un ressort (8) disposé de façon à maintenir le verrou (2) en position verrouillée, position dans laquelle l'extrémité du verrou (2) dépasse du logement (25) en direction de la mâchoire d'accouplement (27) au moins partiellement par-dessus la rotule (11) pour verrouiller celle-ci dans la mâchoire d'accouplement (27), tandis qu'en position libre le verrou (2) se retire dans le logement (25), permettant ainsi à la rotule (11) de remonter hors du logement (25) ; un levier de manoeuvre (3) disposé dans l'ouverture (28) située au-dessus du verrou (2) du logement (25), destiné particulièrement à basculer le verrou de position verrouillée en position libre ; un dispositif d'inversion de traction (26) muni d'un système de leviers (3, 33, 33') relié au châssis (1) par une cheville d'articulation (4) reliant entre eux le levier de manoeuvre (3), par une seconde cheville d'articulation (6), et le verrou (2) par un troisième point ou une surface de contact du levier, et transformant un déplacement vers le haut du levier de manoeuvre (3) en un déplacement du verrou (2) de la position verrouillée vers la position libre, **caractérisé par le fait que** la direction radiale de la jonction du levier de manoeuvre (3) définie par la ligne passant entre la première et la deuxième cheville d'articulation (4, 6) dans l'organe de levier articulé (3, 33, 33') est essentiellement différente de la direction radiale de la jonction du verrou (2) définie par une seconde ligne passant par la première cheville d'articulation (4) et le troisième point ou zone de contact, et que le verrou (2) s'ouvre vers le bas dans le logement (25).

2. Crochet d'attelage conforme à la revendication 1, **caractérisé par le fait que** l'angle entre la direction de traction du levier de manoeuvre (3) qui tire sur le système d'inversion de traction (26) et la direction de traction du verrou (2) se situe entre les valeurs de 70° à 110°, et, selon le procédé de réalisation le plus avantageux de l'invention, de 80° à 100°.

3. Crochet d'attelage conforme aux revendications 1 ou 2, **caractérisé par le fait que** le dispositif d'inversion de traction (26) comporte une roue dentée (5) montée sur paliers tournant dans le logement (25) et disposée de façon à s'encliqueter avec la denture (15) correspondante du verrou (2).

4. Crochet d'attelage conforme à la revendication (3), **caractérisé par le fait que** la roue dentée (5) comporte un levier (17) auquel est fixé par une articulation le levier de manoeuvre (3) pour faire tourner la roue dentée (5) par le levier (17), le rapport de couple ainsi créé étant de 1,1 à 2,0, selon le procédé de réalisation le plus avantageux de l'invention de 1,3 à 1,7.

5. Crochet d'attelage conforme à la revendication 3 ou 4, **caractérisé par le fait que** la roue dentée (5) est disposée au-dessous du verrou (2), le levier de manoeuvre (3) allant depuis le haut par-dessus le verrou (2) jusqu'à la roue dentée (5) située en bas.

6. Crochet d'attelage conforme à l'une des revendications 3 à 5, **caractérisé par le fait que** la roue dentée (5) n'a de denture (16) que sur une portion en arc de cercle, l'angle de cet arc de cercle étant de 60° à 120°, selon le procédé de réalisation le plus avantageux de l'invention de 90° à 110°.

7. Crochet d'attelage conforme à la revendication 6, **caractérisé par le fait que** les dents (16) sont droites et qu'elles sont au nombre de 3 à 9, selon le procédé de réalisation le plus avantageux de l'invention leur nombre varie entre 4 et 6.

8. Crochet d'attelage conforme à la revendication 1 ou 2, **caractérisé par le fait que** le dispositif d'inversion de traction (26) comprend une pièce intermédiaire (33) disposée de façon à tourner sur des paliers dans le logement (25) et reliée au verrou (2) au moyen d'un bras articulé (34).

9. Crochet d'attelage conforme à la revendication 1 ou 2, **caractérisé par le fait que** le dispositif d'inversion de traction (26) comprend une pièce intermédiaire (33') disposée de façon à tourner sur des paliers dans le logement (25) et comportant une saillie (36), et que le verrou comporte une rainure (36') correspondant à la saillie (36), la pièce intermédiaire (33') étant disposée de façon à déplacer le verrou (2) par l'intermédiaire de la saillie (36).

10. Crochet d'attelage conforme à la revendication 9, **caractérisé par le fait que** la pièce intermédiaire (33') est reliée par une articulation au levier de manoeuvre (3) par l'intermédiaire d'une glissière (39).

11. Crochet d'attelage conforme à la revendication 10, **caractérisé par le fait qu'**en position verrouillée, au niveau de la partie supérieure de la glissière (39), un trou (40) se trouve pratiqué dans le crochet d'attelage pour permettre de placer une goupille d'arrêt dans la glissière.

12. Crochet d'attelage conforme à la revendication 8 ou 9, **caractérisé par le fait que** la pièce intermédiaire (33) comprend un levier (17') auquel le levier de manoeuvre (3) est fixé par une articulation, pour faire tourner la pièce intermédiaire (33, 33') par l'intermédiaire du levier (17'), le rapport de couple ainsi obtenu étant de 1,0 à 2,4, selon le procédé de réalisation le plus avantageux de l'invention de 1,5 à 2,0.

13. Crochet d'attelage conforme à la revendication 8 ou 9, **caractérisé par le fait que** la pièce intermédiaire (33, 33') et une partie du bras articulé (34) sont situées au-dessus du verrou (2).

14. Crochet d'attelage conforme à l'une des revendications 1 à 13, **caractérisé par le fait que** dans le verrou (2) se trouve une glissière (9) ou une surface (9') et sur le châssis une cheville (7) qui y est adaptée et qui est destinée à limiter le mouvement linéaire du verrou (2).

15. Crochet d'attelage conforme à la revendication 14, **caractérisé par le fait que** la surface (9') forme, au bas du verrou (2), une encoche (37) dans laquelle la cheville (7) vient se placer quand le verrou (2) est en position verrouillée.

16. Crochet d'attelage conforme à l'une des revendications 1 à 15, **caractérisé par le fait que** la partie supérieure du levier de manoeuvre (3) est dimensionnée de façon à ce que, lorsque le verrou (2) est en position verrouillée, ladite partie supérieure obture l'orifice (28) au-dessus du logement (25).

17. Crochet d'attelage conforme à la revendication 14, **caractérisé par le fait que** la glissière (9) du verrou (2) est incurvée de telle sorte que l'extrémité inférieure du verrou (2) tourne vers le bas quand on tire le verrou (2) pour le basculer de la position verrouillée en position libre.

18. Crochet d'attelage conforme à l'une des revendications 1 à 17, **caractérisé par le fait que** le verrou (2) est une pièce réalisée par moulage de précision.

19. Crochet d'attelage conforme à l'une des revendications 3 à 7, **caractérisé par le fait que** la roue dentée (5) est une pièce réalisée par moulage de précision.
